Europäisches Patentamt

European Patent Office

Office européen des brevets

(11) Numéro de publication: **0 534 813 B1**

# FASCICULE DE BREVET EUROPEEN

(45) Date de publication de fascicule du brevet: **21.09.94**

(51) Int. Cl.5: **F02D 41/14**, F02D 37/02, F02D 41/26

(21) Numéro de dépôt: **92402413.6**

(22) Date de dépôt: **04.09.92**

(54) **Procédé de correction des paramètres de contrôle d'un moteur à combustion interne et dispositif de mise en oeuvre du procédé.**

(30) Priorité: **27.09.91 FR 9111919**

(43) Date de publication de la demande:
**31.03.93 Bulletin 93/13**

(45) Mention de la délivrance du brevet:
**21.09.94 Bulletin 94/38**

(84) Etats contractants désignés:
**DE GB IT**

(56) Documents cités:
**EP-A- 0 185 552**
**EP-A- 0 337 366**
**EP-A- 0 339 602**
**WO-A-89/07709**
**DE-A- 3 432 757**

(73) Titulaire: **AUTOMOBILES PEUGEOT**
**75, avenue de la Grande Armée**
**F-75116 Paris (FR)**

Titulaire: **AUTOMOBILES CITROEN**
**62 Boulevard Victor-Hugo**
**F-92200 Neuilly-sur-Seine (FR)**

(72) Inventeur: **Blayer, Michel**
**3, avenue de Maintenon**
**F-78150 Le Chenay (FR)**
Inventeur: **Luisin, Pascal**
**Apt 10 - 5,7 rue Léon-Maurice Nordmann**
**F-92250 La Garenne Colombes (FR)**

(74) Mandataire: **Pinchon, Odile et al**
**GIE PSA PEUGEOT CITROEN,**
**Propriété Industrielle,**
**18, rue des Fauvelles**
**F-92250 La Garenne Colombes (FR)**

**Description**

La présente invention concerne un procédé de correction d'un ou plusieurs paramètres de contrôle d'un moteur à combustion interne.

De tels procédés peuvent être utilisés par exemple dans l'élimination des oscillations de l'accélération longitudinale d'un véhicule.

Il est connu dans l'art antérieur d'effectuer des corrections et des réglages des paramètres de contrôle d'un moteur pour éliminer les oscillations en effectuant la surveillance d'un paramètre et en introduisant dans la boucle de commande du paramètre de contrôle du moteur une constante à des instants déterminés en fonction de la détection à venir des oscillations. Par exemple le document WO-A-8907 709 décrit un dispositif pour amortir plus ou moins les oscillations de l'accélération longitudinale d'un véhicule, cet amortissement étant réalisé de manière empirique.

De tels dispositifs présentent l'inconvénient de poser plusieurs problèmes consistant à déterminer quand il faut introduire la correction puisque celle-ci n'intervient pas en permanence. Un deuxième problème consiste à déterminer quand il faut s'arrêter. Un troisième problème consiste à déterminer sur quel paramètre il faut faire agir la correction car le comportement d'un véhicule dépend de nombreux paramètres qui ne concernent pas uniquement le moteur.

D'autre part, le document EP 337 366 décrit un procédé permettant d'asservir la vitesse d'un véhicule à la position du pied du conducteur en utilisant une modélisation du couple moteur. Toutefois cette modélisation n'est pas du tout utilisée pour résoudre le problème posé par les oscillations de l'accélération longitudinale d'un véhicule.

Un premier but de l'invention est donc de proposer un procédé qui pallie les inconvénients de l'art antérieur.

A cet effet, l'invention a pour objet un procédé de correction d'un paramètre de contrôle av (ou ti) d'un moteur à combustion interne par un terme de correction, caractérisé en ce que le paramètre av (ou ti) est calculé au moins en fonction du régime du moteur Nm = X1 et que le terme de correction dav (ou dti) est calculé à partir de :

- deux valeurs calculées, dCME et CMI, CMI étant le couple moyen indiqué estimé à partir d'au moins Nm, dCME étant la variation du couple calculée en fonction d'un paramètre X3(k + 1), X3 (k + 1) étant calculé à partir de X1 (k) = Nm (k) ; X2 (k) qui représente une fonction linéaire de X1 et de la dérivée de X1 et X3 (k) qui représente la dérivée de X2 ; k et k + 1 indiquant un instant présent et un instant futur
- du rapport de la boîte de vitesses

- et du couple moyen effectif estimé CME, CME étant calculé à partir de CMI et de av (ou ti).

Selon une particularité de l'invention, la correction à appliquer est déterminée en fonction d'un écart de paramètre de contrôle et d'un écart de couple fonction de la correction variable appliquée à la variable représentative des oscillations du véhicule.

Selon une autre particularité, l'écart de paramètre de contrôle est déterminé à partir d'un premier tableau matriciel mémorisé représentatif de l'évolution de base des paramètres de contrôle en fonction du régime moteur et d'un second tableau matriciel représentatif de l'évolution optimale des paramètres de contrôle en fonction du régime moteur.

Selon une autre particularité, le modèle estimateur de la transmission exprime le régime moteur X1 et les oscillations X3 en fonction d'une part de ces mêmes variables d'état et d'une pluralité de matrices carrées de dimension 3 et, d'autre part, du couple moteur et d'une pluralité de matrices colonnes à trois lignes.

Selon une autre particularité, un couple formé d'une matrice carrée et d'une matrice colonne correspondant au modèle continu est mémorisé pour chaque rapport de transmission déterminé.

Selon une autre particularité, à partir d'un couple formé d'une matrice carrée et d'une matrice colonne correspondant à un rapport de transmission donné et pour une période d'échantillonnage donnée, un dispositif calculateur détermine les matrices discrétisées F et respectivement G représentant une approximation du modèle estimé de la transmission, soit à l'ordre premier, soit à l'ordre second, soit à un ordre supérieur, selon le degré de précision souhaité.

Selon une autre particularité, la période d'échantillonnage Te dépend du régime moteur (ex : temps entre deux PMH).

Selon une autre particularité, à l'approximation du premier ordre, la matrice F est égale à I + A . Te, la matrice G est égale à (B).Te.

Selon une autre particularité, à l'approximation du second ordre, la matrice F est égale à

$$ I + A \cdot Te + \frac{A^2}{2} \cdot Te^2 $$

la matrice G est égale à

$$ B \cdot Te + A \cdot \frac{B}{2} \cdot Te^2 \cdot $$

Selon une autre particularité, le procédé comporte une étape de détermination d'un coefficient correcteur variable en fonction de la période d'échantillonnage et du rapport de transmission à l'aide d'un tableau matriciel mémorisé représentatif de l'évolution de la correction à appliquer pour les différentes valeurs de la période d'échantillonnage.

Selon une autre particularité, le tableau matriciel représentatif de la correction a été préalablement calculé pour chaque valeur de la période d'échantillonnage et pour chaque rapport de transmission sur un simulateur numérique en satisfaisant les conditions de performance maximum, d'oscillation minimale du système en boucle et de critères d'énergie minimale de correction.

Selon une autre particularité, et à titre d'exemple, le tableau matriciel représentatif du coefficient correcteur (grj) pour un rapport de transmission donné est représenté par les deux relations suivantes correspondant à deux droites sécantes :

pour $1/Te < 45,5$

$gr1 = (54,4 . 10^{-3}.1/Te + 7,68)/100$

pour $1/Te \geq 45,5$

$gr1 = (0,454.1/Te - 10,4)/100$

Selon une autre particularité, et à titre d'exemple, le tableau matriciel représentatif du coefficient correcteur (grj) pour un autre rapport de transmission donné est représenté par les deux relations suivantes correspondant à deux droites sécantes

pour $1/Te < 62,5$

$gr2 = (41,7 . 10^{-3}.1/Te + 3,475)/100$

pour $1/Te \geq 62,5$

$gr2 = (0,158.1/Te - 3,83)/100$

Selon une autre particularité, le modèle moteur permet d'élaborer le couple moteur estimé en fonction de l'écart de paramètre de contrôle du régime moteur mesuré et de la pression répartiteur mesurée.

D'autres particularités et avantages de la présente invention apparaîtront plus clairement à la lecture de la description ci-après faite en référence aux dessins annexés dans lesquels :

- la figure 1 représente le schéma de principe de la régulation appliquée à un paramètre de contrôle d'un moteur à combustion interne à essence ;
- la figure 2 représente le schéma détaillé de la régulation pour ce même moteur à essence ;
- la figure 3 représente le schéma de principe de la régulation appliquée aux paramètres de contrôle d'un moteur diesel ;
- la figure 4 représente la courbe représentative de la matrice de points mémorisés pour établir le coefficient de correction variable de la régulation.

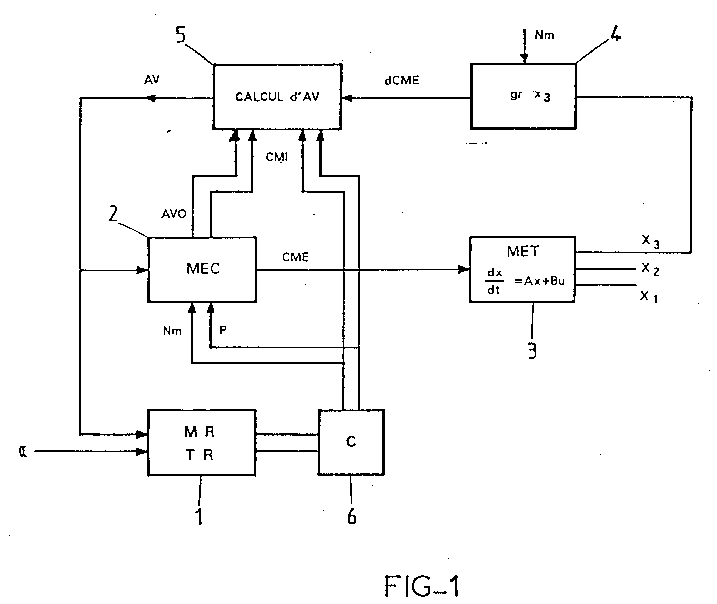

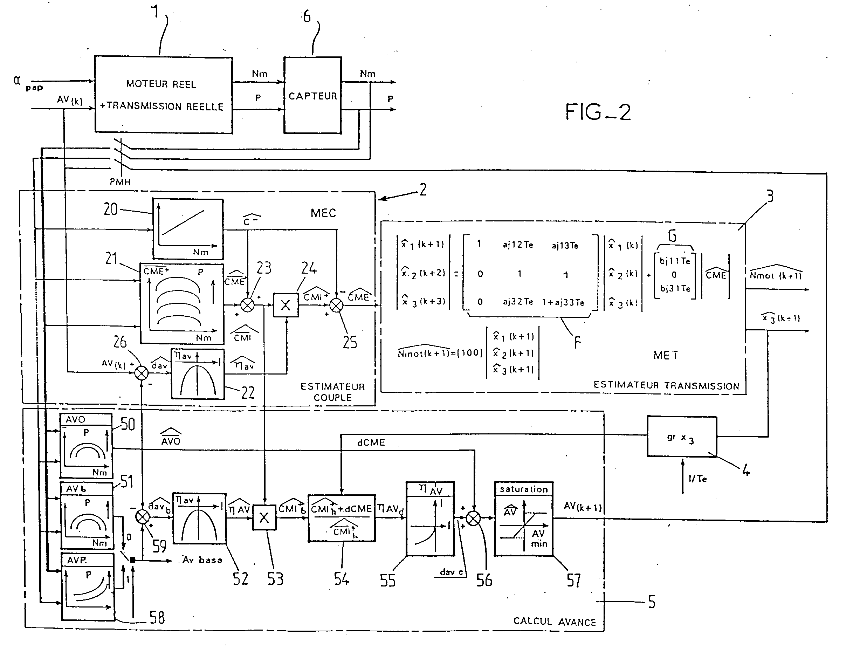

La figure 1 représente le principe du dispositif permettant la mise en oeuvre du procédé de correction des paramètres de contrôle d'un moteur à combustion interne dans lequel le paramètre de contrôle est l'avance à l'allumage. La commande de ce paramètre est déterminée par une boucle de régulation afin d'éliminer les oscillations de l'accélération longitudinale du véhicule sans diminuer pour autant les performances. Cette commande de l'avance à l'allumage (davc + AV) ainsi que la commande de l'angle de papillon du système de carburation sont appliquées à l'ensemble (1) moteur réel (MR), transmission réelle (TR). L'ensemble (1) constituant le moteur réel et la transmission réelle réagit en fonction des commandes. Des capteurs (6) permettent de mesurer le régime moteur et la pression du répartiteur d'admission à chaque point mort haut pour appliquer ces valeurs mesurées d'une part à un modèle d'évaluation de couple (2), d'autre part à un dispositif de calcul d'avance (5). Le modèle d'évaluation de couple (2) MEC délivre sur une sortie un couple moyen effectif CME qui est envoyé comme variable en entrée d'un dispositif (3) d'évaluation d'une variable (X3) utilisant un modèle d'estimation de la transmission pour déterminer cette variable (X3). Cette variable (X3) est ensuite multipliée dans un dispositif (4) par un coefficient (grj) déterminé dans le dispositif (4) en fonction du régime moteur, c'est-à-dire de l'inverse de la période d'échantillonnage (Te) et du rapport de transmission. Le résultat du produit de la variable par le coefficient de correction fournit une valeur (dCME) de correction de couple qui est envoyée sur un dispositif (5) de calcul de correction d'avance (dav) pour déterminer l'avance à appliquer au moteur (1). Ce dispositif (5) fournit à un additionneur (56, fig2) la correction d'avance à appliquer sur l'avancé normalement déterminée pour la commande du moteur en fonction des commandes appliquées par l'utilisateur. Le dispositif (5) de calcul d'avance reçoit également du dispositif permettant l'estimation du couple (2) MEC un signal représentatif du couple moyen indiqué (CMI).

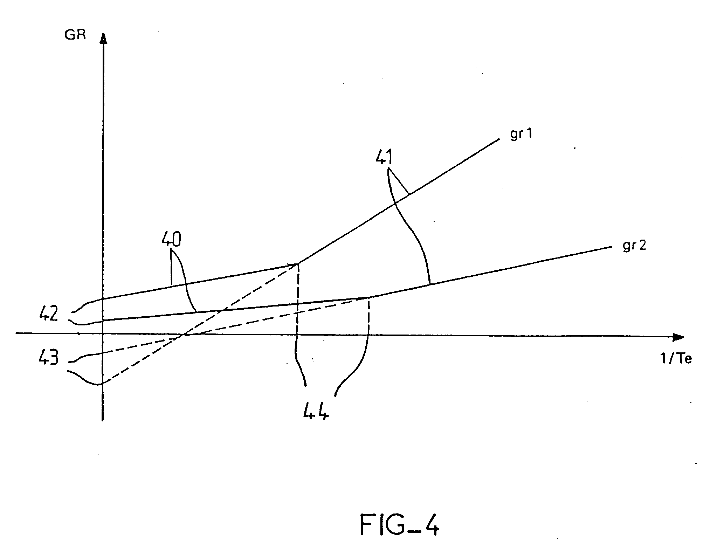

L'évaluation du coefficient de correction variable s'effectue dans le circuit (4) par mémorisation d'une courbe assimilée à deux droites sécantes (40, 41, fig 4) qui peuvent être mémorisées, soit sous forme d'une série de points en fonction de la valeur 1/Te, soit sous forme de cinq paramètres correspondant à l'abscisse de cassure (44), les pentes de chacune des deux droites (40, 41) et les deux ordonnées à l'origine (42, 43).

Le modèle d'estimation de la transmission (3) est constitué pour chaque rapport différent enclenché "j" par deux matrices (Aj, Bj), la première (Aj) étant une matrice carrée d'ordre 3, la deuxième (Bj) étant une matrice colonne à trois lignes. La matrice (Aj) a les coefficients de sa première colonne nuls et sa deuxième ligne comporte un seul "1" dans la position de la troisième colonne, les autres coefficients de la deuxième ligne étant nuls. La matrice (Bj) a le coefficient de la deuxième ligne également nul. Les autres coefficients constituant la matrice (Aj) (aj12, aj13, aj32, aj33) et la matrice (Bj), (bj11, bj31) sont des coefficients déterminés par calcul de la représentation de la transmission pour le rapport donné engagé et par approximation de ces calculs. Chaque couple de matrices, respectivement (A1, B1 ; A2, B2 ; A3, B3 ; A4, B4 ; A5, B5 ;Ar, Br) correspondant à chaque rapport j respectif (1er, 2nd, 3ème, 4ème, 5ème, M Arr) de boîte de vitesse est mémorisé par le dispositif de l'invention. Ces matrices (Aj, Bj) permettent de représenter l'évolution d'un vecteur d'état (X) en fonction de la matrice d'état (Aj), de la matrice de commande (Bj) et d'un vecteur de commande (U). Ce vecteur d'état (X) est constitué de trois variables (X1, X2, X3), (X1) qui représente le régime moteur, c'est-à-dire la vitesse de rotation du vilebrequin, (X2) qui représente une fonction linéaire de (X1) et de la dérivée de (X1) et (X3) qui représente la dérivée de (X2). (X3) représente les oscillations de l'accélération du véhicule sur laquelle on souhaite effectuer une correction pour éliminer ces oscillations sans pour autant diminuer le performances.

La figure 2 représente une vue schématique plus détaillée sur laquelle on retrouve les mêmes éléments qu'à la figure 1 mais avec des détails supplémentaires. Ainsi les signaux fournis par les capteurs (6) représentatifs du régime moteur (Nm) et de la pression (P) du répartiteur sont prélevés au point mort haut du moteur (PMH) pour être envoyés sur le dispositif estimateur de couple (MEC) constitué d'un premier tableau matriciel (20) représentatif de l'évolution linéaire du couple négatif estimé $(\widehat{C^-})$ qui est la somme du couple de pompage et du couple de frottement et pratiquement linéaire en fonction du régime moteur. Une deuxième pluralité de tableaux (21) matriciels, chacun représentatif de la modification du couple moyen effectif optimal $(\overline{CME}^+)$ déterminant le couple maximum disponible sur l'arbre moteur en fonction du régime moteur (Nm) pour une pression de répartiteur (P) donnée. A chaque pression de répartiteur (P) correspond un tableau représentatif (21). Le signe ∧ veut dire que la valeur du paramètre (C, AV) est estimée ; le signe (⁻) veut dire optimal. Enfin, un troisième tableau (22) représente l'évolution du rendement du moteur en fonction de la variation du paramètre de contrôle du moteur. En l'occurrence le paramètre de contrôle du moteur est la variation d'avance estimée

$$(\widehat{dav})$$

calculée dans un différentiateur (26) par différence entre le signal d'avance appliqué (AV) et le signal d'avance optimale estimée

$$(\widehat{\overline{AVO}})$$

déterminé comme on le verra ultérieurement. Le couple négatif estimé $(\widehat{C^-})$ est additionné dans un additionneur (23) au couple moyen effectif optimal estimé

$$(\widehat{\overline{CME}})$$

pour donner le couple moyen indiqué optimal positif estimé

$$(\widehat{\overline{CMI}}^+)$$

qui est envoyé d'une part sur un multiplicateur (24), d'autre part sur un deuxième multiplicateur (53) du circuit du calcul d'avance (5). Ce couple

$$(\widehat{\overline{CMI}}^+)$$

correspond au couple qui serait obtenu avec un rendement mécanique de 1. La sortie de ce multiplicateur (24) délivre un signal représentatif du couple moyen indiqué positif estimé

$$(\widehat{CMI}^+)$$

qui est envoyé sur un différentiateur (25) dont l'entrée négative reçoit la valeur du couple négatif estimé $(\widehat{C^-})$ pour en sortie élaborer le couple moyen effectif estimé

$$(\widehat{CME})$$

qui correspond au couple disponible sur l'arbre (effectif) quand le rendement d'avance (nav) est différent de "1". Le couple moteur estimé

$$(\widehat{CME})$$

est envoyé sur le dispositif estimateur de transmission (3).

Le dispositif de calcul d'avance (5) comporte une première pluralité de tableaux matriciels (51), chaque tableau matriciel permettant pour une valeur mesurée et déterminée de press ion répart iteur, de déduire l'avance de base (Avb) en fonction du régime moteur (Nm) mesuré par les capteurs.

Une deuxième pluralité de tableaux matriciels (50) permet également de fournir l'avance optimale (Avo) en fonction du régime moteur (Nm) et de la pression répartiteur. Un tableau matriciel est associé à chaque pression répartiteur.

Enfin, une dernière pluralité de tableaux (58) permet de fournir l'avance pied levé (Avp) en fonction de la pression répartiteur et du régime moteur. La dernière série de tableaux pied levé (58) n'est utilisée que lorsqu'un capteur de détection de pied levé signale cette condition au système. Dans les autres cas, on utilise la pluralité de tableaux d'avance de base (Avb) et d'avance optimale (Avo) en envoyant le signal d'avance optimale (Avo) sur l'entrée négative d'un différentiateur (58) qui détermine ainsi la différence d'avance de base (dAVb). Cette différence d'avance est envoyée en entrée dans un dispositif (52) permettant d'évaluer le rendement en fonction de l'avance et la sortie de ce dispositif (52) est envoyée sur une entrée d'un multiplicateur (53) qui reçoit sur une autre entrée le couple moteur pour déterminer la variation de couple moteur indiqué (CMI) qui est envoyée sur un dispositif (54) permettant de déterminer le rendement de couple. Ce dispositif (54) reçoit également sur une autre entrée la variation du couple moteur estimée (dCME) par la boucle de retour (grj.X3). Le dispositif (52) est constitué d'un tableau matriciel permettant de déterminer le rendement du moteur en fonction de la variation d'avance. Un dispositif (55) constitué par un tableau matriciel correspondant à la fonction inverse du rendement permet de déterminer en sortie la variation d'avance de correction (davc). Cette' variation d'avance (davc) est envoyée sur un additionneur (56) qui reçoit d'autre part l'avance optimale (Avo) déterminée à l'aide de la pluralité de tableaux matriciels (50). La sortie de cet additionneur (56) est envoyée sur un saturateur (57) dont la sortie constitue la commande d'avance appliquée au moteur. L'avance optimale (Avo) est également appliquée à l'entrée négative du différentiateur (26) du dispositif estimateur de couple (2). Le retour de la régulation constitué par la variation de couple estimé (dCME) est fourni par un dispositif (4) qui permet à partir de la variable d'état (X3) de multiplier cette variable par une valeur variable (grj) de gain de retour, déterminée en fonction de la période d'échantillonnage (Te) et du rapport de transmission par le tableau matriciel représenté à la figure 4. Le dispositif estimateur de transmission (3) est constitué pour chaque rapport j de boîte de vitesse d'une matrice (Aj) et d'une matrice (Bj) mémorisées et pour lesquelles on calcule en temps réel les matrices discrétisées correspondantes (Fj) et (Gj) que l'on appelle (F) et (G) par la suite pour simplifier les notations. La matrice (F) est égale à I + A Te et (G) est égale à B . Te dans une approximation du premier ordre. Dans une approximation du second ordre (F) est égale à : I + A . Te + A$^2$ . Te$^2$/2 et (G) est égale à B . Te + A . B . Te$^2$/2. La figure 2 représente les matrices (F) et (G) pour les approximations du premier ordre. Ces matrices permettent de déterminer les variables d'état à l'instant (K + 1) en fonction des variables d'état à l'instant (K) et des commandes constituées par le couple moteur et le régime moteur.

On comprend donc à l'aide des figures 1 et 2 que le dispositif ainsi obtenu permet d'effectuer en permanence des corrections sur l'avance du moteur à essence, ceci quelque soit le régime et le rapport de boîte de vitesse engagé. L'indice (j) des coefficients (Aj) et (Bj) des matrices (Fj) et (Gj) est représentatif du numéro du rapport de boîte de vitesse et ces coefficients (aj, bj) varient selon le rapport de boîte de vitesse engagé. Le rapport de boîte de vitesse engagé peut être déterminé à partir de la mesure du régime moteur et de la vitesse de l'arbre de boîte de vitesse, par exemple par le procédé de la demande de brevet EP 0 406 712.

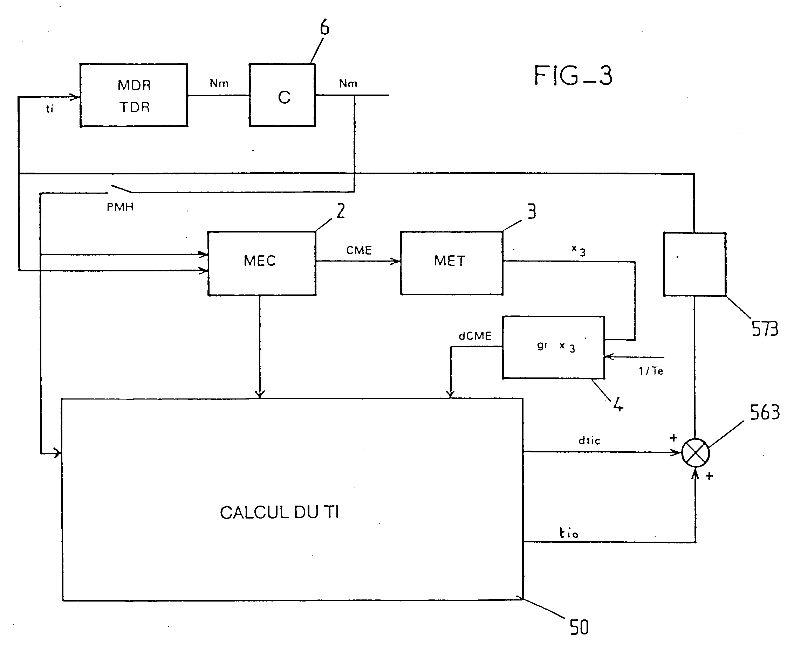

La figure 3 représente l'application du principe de régulation de l'invention à un ensemble moteur diesel (MDR) et une transmission (TDR) du moteur diesel dont la commande est constituée par le temps d'injection (ti) et dont le paramètre mesuré par un capteur (6) au point mort haut (PMH) du moteur est le régime moteur (Nm). Comme dans l'application précédente, le régime moteur (Nm) est envoyé sur un modèle estimateur de couple (2) dont le couple estimé (CME) est envoyé sur un modèle estimateur de transmission (3) pour déterminer une variable (X3) qui se trouve multipliée par un gain de retour (grj) variable en fonction de la période d'échantillonnage (Te) et du rapport de transmission. Ceci permet de déterminer une variation de couple (dCME) qui est envoyée sur un circuit (50) de calcul du temps d'injection, en fonction d'une part du régime moteur (Nm) et, d'autre part, d'une information provenant du modèle estimateur de couple (2) pour déterminer la variation du temps d'injection de correction (dtic). Cette dernière est combinée avec le temps d'injection optimal (tio) dans un additionneur (563) dont la valeur de sortie est traitée dans un saturateur (573) afin de définir la commande du temps d'injection.

Le gain de retour (Gr) représenté figure 4 est déterminé en calculant l'expression :

$$\text{Ret } (P.i - F + G.R) = \emptyset$$

Dans cette expression R est reconstituée par un vecteur ligne dont le premier coefficient (R1) est nul et les deux coefficients (R2, R3) sont à déterminer. Par ailleurs, comme on cherche à ne pas altérer le comportement du véhicule après amortissement des oscillations, on démontre que cette condition a pour conséquence que R2 est également nul. Cette condition permet, si l'on appelle (P1) et (P2) les pôles du système en boucle fermée définis par l'expression nulle du déterminant, d'exprimer le pôle (P1) en fonction du pôle (P2) par la relation P1 = $F_n$ (P2). Ensuite on s'impose comme autre condition pour déterminer le coefficient de correction (grj) de minimiser la quantité (Q) qui est la somme des carrés des pôles (P1) et (P2). Enfin on prend un dernier critère qui tient compte des problèmes de saturation de la commande. Si on appelle (Cmax) la correction maximale, le dernier critère consiste à minimiser la somme des carrés des pôles (P1) et (P2) et d'un terme constitué par le produit d'un coefficient de pondération lambda par le carré de la correction maximale. Pour un coefficient lambda donné, le critère minimisé est donc $Q = P1^2 + P2^2 + lambda.Cmax^2$, Cmax étant égal à (grj.$X_3$max).

Des calculs ont permis de déterminer les coefficients de pondération qui ont été choisis pour le premier rapport de boîte de vitesse, égal à 0,8 et pour le second rapport de boîte de vitesse, égal à 0,45. Une fois lambda sélectionné pour un rapport de boîte de vitesse et la période d'échantillonnage choisie (donc le régime moteur choisi), on calcule pour les valeurs de P2 = -1 à P2 = 1 par pas de 0,01, la valeur de P1. On détermine R3 par la relation R3 = [F22 + F33 - (P1 + P2)]/G3. Ensuite on calcule la réponse indicielle correspondante avec une recherche de X3max. Ensuite est effectué le calcul de la quantité $Q = P1^2 + P2^2 + lambda.grj.X3max^2$. Ces calculs permettent de déterminer la valeur minimum de Q et les pôles et le retour correspondants, ce qui permet de définir la valeur grj pour une période d'échantillonnage Te donnée et un coefficient lambda donné. L'opération est répétée pour chaque régime moteur, c'est-à-dire pour chaque valeur de la période d'échantillonnage (Te).Cette méthode de calcul permet de déterminer R3 ou la valeur grj et on constate que l'on obtient deux droites sécantes dont les caractéristiques sont les suivantes :

- en première avec lambda = 0,8

    pour 1/Te < 45,5
    
    gr1 = R3 = $(54,4.10^{-3} .1/Te + 7,68)$/100
    
    pour 1/Te ≥ 45,5
    
    gr1 = R3 = (0,454.1/Te - 10,4)/100

- en seconde avec lambda : 0,45

    pour 1/Te < 62,5
    
    gr2 = R3 = $(41,7.10^{-3} .1/Te + 3,475)$/100
    
    pour 1/Te ≥ 62,5 gr2 = R3 = (0,158.1/Te - 3,83)/100

La méthode de calcul du coefficient de correction variable (grj) permet d'établir le tableau matriciel utilisé par le procédé de régulation mis en oeuvre par le dispositif de l'invention. Le dispositif permet d'effectuer une régulation en continu d'un paramètre de contrôle d'un moteur à combustion interne en éliminant les oscillations sans diminuer les performances du véhicule. Ceci permet également de diminuer le temps de mise au point du véhicule par suppression quasi complète des réglages. L'homme de métier comprendra aisément que l'ensemble des dispositifs constituant la régulation et les modèles sont réalisés par un calculateur, des mémoires de stockage des modèles, des résultats intermédiaires, des tableaux matriciels nécessaires à l'élaboration des paramètres et des variables d'état et des mémoires de stockage du programme permettant d'effectuer les calculs et les opérations du procédé décrit.

Certaines parties de la régulation peuvent être réalisées, soit par un programme exécuté par le calculateur, soit par une combinaison d'un programme exécuté sur le calculateur et des éléments discrets rajoutés pour constituer les éléments des dispositifs décrits.

**Revendications**

1. Procédé de correction d'un paramètre de contrôle av (ou ti) d'un moteur à combustion interne par un terme de correction, le paramètre av (ou ti) étant calculé au moins en fonction du régime moteur Nm = X1 et le terme de correction dav (ou dti) étant calculé à partir de :

    - deux valeurs calculées, dCME et CMI, CMI étant le couple moyen indiqué estimé à partir d'au moins Nm, dCME étant la variation du couple calculée en fonction d'un paramètre X3(k + 1), X3 (k + 1) étant calculé à partir de X1 (k) = Nm (k) ; X2 (k) qui représente une fonction linéaire de X1 et de la dérivée de X1 et X3 (k) qui représente la dérivée de X2; k et k + 1 indiquant un instant présent et un instant futur
    - du rapport de la boîte de vitesses
    - et du couple moyen effectif estimé CME, CME étant calculé à partir de CMI et de av (ou ti).

2. Procédé selon la revendication 1, caractérisé en ce que la correction à appliquer est déterminée en fonction d'un écart de paramètre de contrôle (davb) ou (dtib) et d'un écart de couple (dCME) fonction de la correction variable (grj) appliquée à la variable représentative (X3) des oscillations du véhicule.

**3.** Procédé selon la revendication 1 ou 2, caractérisé en ce que l'écart de paramètre de contrôle (davb, dtib) est déterminé à partir d'une pluralité de tableaux matriciels (51) mémorisés représentatifs de l'évolution de base (avb, tib) des paramètres de contrôle en fonction du régime moteur (Nm) et d'une seconde pluralité de tableaux matriciels (50) représentatifs de l'évolution optimale (avo, tio) des paramètres de contrôle en fonction du régime moteur.

**4.** Procédé selon la revendication 1, caractérisé en ce que le modèle estimateur de la transmission (MET) exprime le régime moteur (X1) et les oscillations (X3) en fonction d'une part de ces mêmes variables d'état (X1, X3) et d'une pluralité de matrices carrées (Aj) de dimension 3 et, d'autre part, du couple moteur (CME) et d'une pluralité de matrices colonnes (Bj) à trois lignes.

**5.** Procédé selon la revendication 4, caractérisé en ce qu'un couple d'une matrice carrée (Aj) et d'une matrice colonne (Bj) est mémorisé pour chaque rapport de transmission (j) déterminé.

**6.** Procédé selon la revendication 4 ou 5, caractérisé en ce que à partir d'un couple d'une matrice carrée (Aj) et d'une matrice colonne (Bj) correspondant à un rapport de transmission (j) donnée et pour une période d'échantillonnage donnée (Te), un dispositif calculateur détermine les matrices discrétisées (F) et respectivement (G) représentant une approximation du modèle estimé de la transmission, soit à l'ordre premier, soit à l'ordre second, soit à un ordre supérieur, selon le degré de précision souhaité.

**7.** Procédé selon la revendication 6, caractérisé en ce que la matrice (F) est égale à I + A . Te, la matrice (G) est égale à B.Te pour un développement au premier ordre.

**8.** Procédé selon la revendication 6, caractérisé en ce que la matrice (F) est égale à

$$I + A.Te + \frac{A^2}{2}.Te^2,$$

la matrice G est égale à

$$B.Te + A.\frac{B}{2}.Te^2$$

pour un développement au second ordre.

**9.** Procédé selon la revendication 1 ou 7 ou 8, caractérisé en ce que le procédé comporte une étape de détermination d'un coefficient correcteur variable (grj) en fonction de la période d'échantillonnage (Te) et du rapport de transmission à l'aide d'un tableau matriciel mémorisé représentatif de l'évolution de la correction (grj) à appliquer pour les différentes valeurs d'échantillonnage (Te).

**10.** Procédé selon la revendication 9, caractérisé en ce que le tableau matriciel représentatif de la correction (grj) a été préalablement calculé pour chaque valeur d'échantillonnage (Te) et du rapport de transmission sur un simulateur numérique en satisfaisant les conditions de performance maximum, d'oscillation minimale du système en boucle fermée et de critères d'énergie de correction minimale.

**11.** Procédé selon la revendication 8, caractérisé en ce que le modèle moteur (MEC) permet d'élaborer le couple moteur estimé (CME) en fonction de l'écart de paramètre de contrôle (dav) du régime moteur mesuré (Nm) et de la pression répartiteur mesurée (P).

**12.** Procédé selon une des revendications 6 à 10, caractérisé en ce qu'il comprend
- la détermination de la variable (X3) en fonction des matrices (F) et (G) calculées en fonction de la période (Te) dépendante du régime moteur ;
- la détermination du coefficient de correction variable (grj) en fonction de la période (Te) dépendante du régime moteur et du rapport de transmission ;
- l'évaluation du produit du coefficient de correction variable (grj) par la variable (X3) pour déterminer la variation du couple moteur (dCME).

**13.** Procédé selon une des revendications 9 et 10, caractérisé en ce que le tableau matriciel représentatif du coefficient correcteur (grj) pour un rapport de transmission donné est représenté par les deux relations suivantes: correspondant à deux droites sécantes:
pour 1/Te < 45,5
gr1 = (54,4 . 10⁻³.1/Te + 7,68)/100
pour 1/Te ≥ 45,5
dr1 = (0,454.1/Te - 10,4)/100

**14.** Procédé selon une des revendications 9 et 10, caractérisé en ce que le tableau matriciel représentatif du coefficient correcteur (grj) pour un rapport de transmission donné est représenté par les deux relations suivantes correspondant à deux droites sécantes :

pour $1/Te < 62,5$

$gr2 = (41,7 . 10^{-3}.1/Te + 3,475)/100$

pour $1/Te \geq 62,5$

$gr2 = (0,158.1/Te - 3,83)/100$

**Claims**

1. A process for correcting a control parameter av (or ti) of an internal combustion engine by a correction term, the parameter av (or ti) being calculated at least as a function of the engine speed Nm = X1 and the correction term dav (or dti) being calculated on the basis of:
   - two calculated values dCME and CMI, CMI being the mean torque indicated, estimated on the basis of at least Nm, dCME being the variation in torque calculated as a function of a parameter X3(k + 1), X3 (k + 1) being calculated on the basis of X1 (k) = Nm (k); X2 (k) which represents a linear function of X1 and the derivative of X1 and X 3 (k) which represents the derivative of X2; k and k + 1 indicating a present moment and a future moment
   - of the gearbox ratio
   - and of the estimated actual average torque CME, CME being calculated on the basis of CMI and av (or ti).

2. A process according to Claim 1, characterised in that the correction to be applied is determined as a function of a deviation in control parameter (davb) or (dtib) and a deviation in torque (dCME) as a function of the variable correction (grj) applied to the representative variable (X3) of the oscillations of the vehicle.

3. A process according to Claim 1 or 2, characterised in that the deviation in control parameter (davb, dtib) is determined on the basis of a plurality of stored matrix tables (51) representing the basic evolution (avb, tib) of the control parameters as a function of the engine speed (Nm) and a second plurality of matrix tables (50) representing the optimum evolution (avo, tio) of the control parameters as a function of the engine speed.

4. A process according to Claim 1, characterised in that the estimating model for the transmission (MET) expresses the engine speed (X1) and the oscillations (X3) as a function, on the one hand, of these same state variables (X1, X3) and a plurality of square matrices (Aj) with a dimension of 3 and, on the other hand, the engine torque (CME)and a plurality of three-line column matrices (Bj).

5. A process according to Claim 4, characterised in that a torque consisting of a square matrix (Aj) and's column matrix (Bj) is stored for each transmission ratio (j) determined.

6. A process according to Claim 4 or 5, characterised in that, on the basis of a square matrix (Aj) and a column matrix (Bj) corresponding to a given transmission ratio (j) and for a given sampling period (Te), a calculating device determines the matrices made discrete (F) and (G) respectively, representing an approximation of the estimated model of the transmission, either of the first order, or of the second order, or else of a greater order, according to the desired degree of accuracy.

7. A process according to Claim 6, characterised in that the matrix (F) is equal to I + A • Te, the matrix (G) is equal to B • Te for a development of the first order.

8. A process according to Claim 6, charactetised in that the matrix (F) is equal to

$$I + A \cdot Te + \underline{\frac{A^2}{2}} \cdot Te^2,$$

the matrix G is equal to

$$B \cdot Te + A \cdot \underline{\frac{B}{2}} \cdot Te^2$$

for a development of the second order.

9. A process according to Claim 1 or 7 or 8, characterised in that the process comprises a stage of determining a variable correcting coefficient (grj) as a function of the sampling period (Te) and of the transmission ratio with the aid of a stored matrix table representing the evolution in the correction (grj) to be applied for the different sampling values (Te).

10. A process according to Claim 9, characterised in that the matrix table representing the correction (grj) has been calculated previously for each sampling value (Te) and of the ratio of transmission on a digital simulator while satisfying the conditions of maximum performance, minimum oscillation of the system in a closed loop and minimum correction energy criteria.

11. A process according to Claim 8, characterised in that the engine model (MEC) makes it possible to work out the estimated engine torque (CME) as a function of the deviation in control parameter (dav) of the measured engine speed (Nm) and of the measured divider pressure (P).

12. A process according to one of Claims 6 to 10, characterised in that it comprises
   - determination of the variable (X3) as a function of the matrices (F) and (G) calculated as a function of the period (Te) dependent on the engine speed;
   - determination of the coefficient of variable correction (grj) as a function of the period (Te) dependent on the engine speed and the transmission ratio;
   - evaluation of the product of the coefficient of variable correction (grj) by the variable (X3) in order to determine the variation of the engine torque (dCME).

13. A process according to one of Claims 9 and 10, characterised in that the matrix table representing the correcting coefficient (grj) for a given transmission ratio is represented by the following two relations corresponding to two straight secants:
   for $1/Te < 45.5$
   $gr1 = (54.4 \cdot 10^{-3} \cdot 1/Te + 7.68)/100$
   for $1/Te \geq 45.5$
   $gr1 = (0.454 \cdot 1/Te - 10.4)/100$

14. A process according to one of Claims 9 and 10, characterised in that the matrix table representing the correcting coefficient (grj) for a given transmission ratio is represented by the following two relations corresponding to two straight secants:
   for $1/Te < 62.5$
   $gr2 = (41.7 \cdot 10^{-3} \cdot 1/Te + 3.475)/100$
   for $1/Te \geq 62.5$
   $gr2 = (0.158 \cdot 1/Te - 3.83)/100$

**Patentansprüche**

1. Verfahren zur Korrektur eines Steuerparameters av (oder ti) eines Verbrennungsmotors durch einen Korrekturterm oder ein Korrekturglied, wobei der Parameter av (oder ti) wenigstens in Abhängigkeit des Motorbetriebs Nm = X1 berechnet wird und der Korrekturterm dav (oder dti) berechnet wird ausgehend von:
   - zwei berechneten Werten, dCME und CMI, wobei CMI das mittlere angegebene Moment ist, das ausgehend von wenigstens Nm geschätzt ist, wobei dCME die Änderung des Moments ist, die in Abhängigkeit eines Parameters X3(k + 1), ist, wobei X3(k + 1) ausgehend von X1 (k) = Nm (k) berechnet wird; X2 (k), das eine lineare Funktion von X1 darstellt und der Ableitung von X1 und X3 (k), das die Ableitung von X2 darstellt; wobei k und k + 1 einen momentanen Zeitpunkt und einen zukünftigen Zeitpunkt angeben
   - des Getriebeverhältnisses und
   - des geschätzten effektiven mittleren Moments CME, wobei CME ausgehend von CMI und von av (oder ti) berechnet wird.

2. Verfahren nach Anspruch 1, dadurch gekennzeichnet, daß die aufzubringende Korrektur in Abhängigkeit einer Abweichung des Steuerparameters (davb) oder (dtib) und einer Abweichung des Moments (dCME) in Abhängigkeit der veränderlichen Korrektur (grj), die auf die Variable (X3) aufgebracht wird, die die Schwingungen des Fahrzeugs darstellt, bestimmt wird.

3. Verfahren nach Anspruch 1 oder 2, dadurch gekennzeichnet, daß die Abweichung des Steuerparameters (davb, dtib) ausgehend von einer Mehrzahl von abgespeicherten Matrizentabellen (51) bestimmt wird, die die Basisentwicklung (avb, tib) der Steuerparameter in Abhängigkeit des Motorbetriebs (Nm) darstellen, und ausgehend von einer zweiten Mehrzahl von Matrizentabellen (50) bestimmt wird, die die optimale Entwicklung (avo, tio) der Steuerparameter in Abhängigkeit des Motorbetriebs darstellen.

4. Verfahren nach Anspruch 1, dadurch gekennzeichnet, daß das Schätzmodell des Getriebes (MET) den Motorbetrieb (X1) und die Schwingungen (X3) einerseits in Abhängigkeit von derselben Zustandsvariablen (X1, X3) und einer Mehrzahl von quadratischen Matrizen (Aj) von der Größenordnung 3 und andererseits vom Motormoment (CME) und einer Mehrzahl von Spaltenmatrizen (Bj) mit drei Zeilen ausdrückt.

5. Verfahren nach Anspruch 4, dadurch gekennzeichnet, daß ein Moment einer quadratischen Matrix (Aj) und einer Spaltenmatrix (Bj) für jedes vorbestimmte Übersetzungsverhältnis (j) gespeichert ist.

6. Verfahren nach Anspruch 4 oder 5, dadurch gekennzeichnet, daß ausgehend von einem Moment einer quadratischen Matrix (Aj) und einer Spaltenmatrix (Bj), entsprechend einem vorgegebenen Übersetzungsverhältnis (j) und für einen vorgegebenen Musterzeitraum (Te) eine Rechenvorrichtung die diskretisierten Matrizen (F) bzw. (G) bestimmt, die eine Annäherung des geschätzten Modells der Übersetzung darstellen, entweder in der ersten Ordnung, oder in der zweiten Ordnung oder in einer höheren Ordnung, gemäß dem gewünschten Genauigkeitsgrad.

7. Verfahren nach Anspruch 6, dadurch gekennzeichnet, daß die Matrix (F) gleich I + A.Te ist, die Matrix (G) gleich B.Te für die Entwicklung in die erste Ordnung ist.

8. Verfahren nach Anspruch 6, dadurch gekennzeichnet, daß die Matrix (F) gleich I + A.Te + $A^2/2.Te^2$ ist, und die Matrix (G) gleich B.Te + A.B/2.Te$^2$ für eine Entwicklung in die zweite Ordnung ist.

9. Verfahren nach Anspruch 1 oder 7 oder 8, dadurch gekennzeichnet, daß das Verfahren einen Bestimmungsschritt eines variablen Korrekturkoeffizienten (grj) in Abhängigkeit des Musterzeitraums (Te) und des Übersetzungsverhältnisses mit Hilfe einer gespeicherten Matrixtabelle ist, die die Entwicklung der aufzubringenden Korrektur (grj) für die unterschiedlichen Musterwerte (Te) darstellt.

10. Verfahren nach Anspruch 9, dadurch gekennzeichnet, daß die Matrixtabelle, die den Korrekturwert (grj) darstellt, für einen jeden Wert des Musters (Te) und des Übersetzungsverhältnis vorher auf einem numerischen Simulator berechnet wurde, unter Zufriedenstellen der maximalen Leistungsbedingungen, einer minimalen Schwingung des Systems im geschlossenen Kreis und Energiekriterien von minimaler Korrektur.

11. Verfahren nach Anspruch 8, dadurch gekennzeichnet, daß das Motormodell (MEC) erlaubt, das geschätzte Motormoment (CME) in Abhängigkeit der Abweichung des Steuerparameters (dav) des gemessenen Motorbetriebszustands (Nm) und des gemessenen Verteilerdruckes (P) herauszuarbeiten.

12. Verfahren nach einem der Ansprüche 6 bis 10, dadurch gekennzeichnet, daß es aufweist:
    - das Bestimmen der Variablen (X3) in Abhängigkeit der Matrizen (F) und (G), die in Abhängigkeit der vom Motorbetriebszustand abhängigen Zeitdauer (Te) berechnet wurden;
    - das Bestimmen des variablen Korrekturkoeffizieten (grj) in Abhängigkeit von der von dem Betriebszustand des Motors und dem Übersetzungsverhältnis abhängigen Zeitdauer (Te);
    - die Bewertung des Produktes des variablen Korrekturkoeffizienten (grj) durch die Variable (X3), um die Veränderung des Motormoments (dCME) zu bestimmen.

13. Verfahren nach einem der Ansprüche 9 oder 10, dadurch gekennzeichnet, daß die den Korrekturkoeffizienten (grj) für ein vorgegebenes Übersetzungsverhältnis darstellende Matrixtabelle durch die beiden nachfolgenden Gleichungen dargestellt wird, die zwei geraden Sekanten entsprechen:
    für 1/Te < 45,5
    gr1 = (54,4 . $10^{-3}$ .1/Te + 7,68)/100
    für 1/Te ≥ 45,5
    gr1 = (0,454.1/Te - 10,4)/100.

14. Verfahren nach einem der Ansprüche 9 oder 10, dadurch gekennzeichnet, daß die den Korrekturkoeffizienten (grj) für ein vorgegebenes Übersetzungsverhältnis darstellende Matrixtabelle durch die beiden nachfolgenden Gleichungen dargestellt wird, die zwei geraden Sekanten entsprechen:
    für 1/Te < 62,5
    gr2 = (41,7 . $10^{-3}$ . 1/Te + 3,475)/100
    für 1/Te ≥ 62,5
    gr2 = (0,158.1/Te - 3,83)/100.

EP 0 534 813 B1

FIG-1

11

FIG_2

$$\begin{vmatrix} \hat{x}_1(k+1) \\ \hat{x}_2(k+2) \\ \hat{x}_3(k+3) \end{vmatrix} = \begin{vmatrix} 1 & aj12Te & aj13Te \\ 0 & 1 & 1 \\ 0 & aj32Te & 1+aj33Te \end{vmatrix} \begin{vmatrix} \hat{x}_1(k) \\ \hat{x}_2(k) \\ \hat{x}_3(k) \end{vmatrix} + \begin{vmatrix} bj11Te \\ 0 \\ bj31Te \end{vmatrix} \widehat{CME}$$

$$\widehat{Nmot(k+1)} = [100] \begin{vmatrix} \hat{x}_1(k+1) \\ \hat{x}_2(k+1) \\ \hat{x}_3(k+1) \end{vmatrix}$$

EP 0 534 813 B1

FIG_3

EP 0 534 813 B1

FIG_4